Europäisches Patentamt

European Patent Office

Office européen des brevets

(11) Publication number : **0 477 156 A2**

# (12) EUROPEAN PATENT APPLICATION

(21) Application number : **91850213.9**

(22) Date of filing : **04.09.91**

(51) Int. Cl.⁵ : **G01S 13/42, G01S 13/24**

(30) Priority : **18.09.90 SE 9002968**

(43) Date of publication of application :
**25.03.92 Bulletin 92/13**

(84) Designated Contracting States :
**AT BE CH DE DK ES FR GB GR IT LI LU NL SE**

(71) Applicant : **Bofors Electronics AB**
**S-175 88 Järfälla (SE)**

(72) Inventor : **Eckersten, Christer**
**Fagelvägen 9**
**S-175 64 Järfälla (SE)**

(74) Representative : **Olsson, Gunnar**
**Nobel Corporate Services Patents and**
**Trademarks**
**S-691 84 Karlskoga (SE)**

(54) **Radar means.**

(57)   The disclosure relates to an apparatus for angular resolution and measurement of radar targets for a radar of the type which transmits a plurality of parallel or repeated frequencies while the radar antenna scans over the relevant radar target. Those measurement values which are obtained from the radar target are multiplied by coefficients obtained from the lobe form of the antenna in a correlator (1). The coefficient is selected such that an impulse-like response is obtained after totalling from a punctiform target in the centre point of the lobe.

EP 0 477 156 A2

Jouve, 18, rue Saint-Denis, 75001 PARIS

## TECHNICAL FIELD

The present invention relates to an apparatus for angular resolution and measurement of radar targets for a radar of the type which transmits on a plurality of parallel or repeating frequencies while the radar antenna scans over a radar target.

## BACKGROUND ART

Radar apparatus for military purposes demand high precision on measuring the angular position of a radar target. Examples of such radar apparatuses are primarily radars for fire control. These radars may be of the tracking type in which the radar, after homing, catches and tracks a target, or combined track while scan radars, in which the radar scans over an angle sector (often a complete revolution) at the same time as the signal processing equipment of the radar detects, stores and keeps track of targets and their positions, and updates these values on each antenna scanning of the targets.

Other types of radar apparatus also demand high precision on measuring targets such as, for example, missile trackers and scanning/homing radars. These latter are employed, for instance, to home in the above-mentioned tracking radars onto targets which they have found while scanning large areas. Consequently, they need not display the same high degree of precision as the latter type of radar, but demands on precision are nevertheless increasing. Ideally, precision should be such that the tracking radar need not seek for the target but can capture it directly. There are also desires in this art that precision be so good as to enable, for example, direct firing at missiles on the basis of information from the homing radar. Aircraft and missiles move so quickly that there is very little time first to home in a tracking radar which is then to find the target and establish tracking before fire control data can be provided to missiles, guns etc.

There is therefore a desire in this art to improve the performance of military radar apparatus in respect of resolution and measuring of a target in the angular direction.

It is previously known, in angular measurement in tracking radars, to employ monopulse technique and so-called "conical scan" technique. These techniques are essentially employed against airborne targets and the technique is described in the radar literature, for example by Skolnik.

The technique presupposes that, theoretically, there is only a single target within the measurement sector in order that this target can be measured with a high degree of precision. However, such is not always the case and, moreover, countermeasures have been developed against this type of radar. For example, such countermeasures can generate ghost targets in the form of strips or repeating jamming transmission for losing the tracking radar.

Many radars for military purposes include functions for accurate measurement of radar targets. There are methods for measuring the position of a target in range and angle which can give better precision than that which corresponds to the pulse length of the radar or the antenna lobe of the radar, respectively. However, if there are several proximal targets, such measurement may become more difficult. If two targets are further away from one another in range than corresponds to the spatial extent of the radar pulse, a gap will occur between the pulse echo responses which makes possible a separation of the targets as two individual targets. If the targets are located more proximal to one another, the pulse echo responses will, however, merge and a single continuous echo response from both of the targets will be obtained. A radar receiver with a filter adapted to the pulse length of the radar gives radar pulses with rise and fall times of the same order of magnitude as the 3 dB length of the pulse. Consequently, it is usually said that the radar is capable of resolving targets which are located at twice the distance of the pulse length from one another. The term pulse length is then taken to signify the distance between the 3 dB points of the pulse. If the targets are located closer to one another, there is a region in the middle where signals from both of the targets interact with one another. Depending upon target size, target interaction and signal processing in the radar, targets can be separated even if they are closer to one another than two pulse lengths. On occasions, a separation of targets at a distance from one another down to one pulse length is possible. The corresponding reasoning applies to separation of targets at an angle in which the width of the antenna lobe plays a corresponding part to that of the pulse length in terms of distance.

A comparison may also be made with targets moving at different speeds. These can be separated using doppler filters in which the filter bandwidths play corresponding roles to that of pulse length and antenna lobe width.

To be able clearly to separate two targets, a good contrast is necessary, which corresponds to necessitating approximately one pulse length between the pulse responses of the targets (3 dB points), an antenna lobe between the 3 dB lobe widths of the target, and a doppler filter between those doppler filters where each respective target is to be found.

By waiving the contrast reqairement and accepting a result which is not always one hundred per cent, targets which lie closer to one another can also be resolved in many cases.

In certain applications, it may be of considerable value to resolve two proximal targets. Examples of such application might be a coastal artillery battery which is to combat two vessels moving parallel to one another with a lateral distance between the vessels of 400 m. If the antenna lobe is, in this case, 1°, resolution "with contrast" implies that the targets must be separated by two degrees if the radar is to be able to provide firing data for two different targets.

On these conditions, the vessels can only be separated when they are at 13 km range from the radar. At 25 km range from the radar, the angle between the targets is only one lobe width, for which reason the targets may merge to form a single target whose centre point is somewhere between the actual targets. Based on this information, the battery would then attempt to put down their fire in the 400 m wide space between the vessels instead of on each respective vessel. If there were only one vessel, the radar would be able to give angular data of a precision which is a fraction of the width of the antenna lobe. If there are two or more vessels lying in close order, these may be read as one target, and firing data will thereby be wildly inaccurate.

## OBJECT OF THE INVENTION

One object of the present invention is to realize an improvement of the angular resolution in a radar, for example for coastal artillery.

One type of radar apparatus employed today in coastal artillery applications is the so-called jump-frequency radar. Since the jump frequency radar changes transmitting frequency from pulse to pulse, jamming transmitters which may be in action must disseminate their effect over a larger frequency range, in which event the jamming effect will be weaker within the current receiver band of the radar and thereby not be sufficient to put the radar out of action on jamming in the antenna side lobes of the radar. Vessel targets are also so large that no MIT is necessary in order that the targets be clearly manifest in the clutter environment. The requirement on-high MIT performance which entails that anti-aircraft radar must transmit several pulses in a row on the same frequency is thus not necessary in this application, with the result that the fixed frequency radar is deemed unsuitable since it is easy to jam.

The jump frequency radar further enjoys the advantage of improving the performance of the radar against so-called glitter. Glitter occurs when radar targets such as vessels are composed of a very large number of radar-reflective parts, whose echo reflections interact with one another, with the result that the total reflection from the radar target changes greatly in size and has its centre point displaced over and alongside the target depending upon the aspect angle of the vessel or on what frequency the radar is transmitting. By forming a mean value from a plurality of measurements at different frequencies, equalization will be obtained of the variations. The radar target becomes reasonably large and its mean position coincides reasonably with that of the target. The error angle will be slight because of glitter. However, this effect is not favourable if the intention is to improve resolution. Mean value formation of the jump frequency measurement over two targets has an equalizing effect witch results in two proximal targets merging together and a radar centre point being given which lies between the two targets.

An example of another type of radar apparatus with suitable base function and in which the present invention may be applied is the radar which is described in Swedish patent application No. 89.02983-9.

In a coastal artillery application, the operators are well aware of the fixed radar image. They know what is land and islands, and their dispersed targets need not be analysed more closely. However, the operator wishes to be able to distinguish vessels in the proximity of islands and in narrow straits, and not least to be able to separate two or more vessels from each other. In a convoy or landing fleet, the operator wishes to be able to separate the different vessels on the radar so that efficient combatting of targets included may be put into effect.

Using radar, it is possible to obtain a resolution in both range and angle, i.e. two dimensions for a surface scanning radar for vessels. In addition it is possible, employing doppler function in the radar, to obtain a resolution in speed, i.e. two targets which lie in the same resolution element in range and in angle may be separated as two targets if they are moving at different speeds.

As far as coastal artillery radar is concerned, angular resolution of targets is today considered restrictive to the performance of the radar. Resolution in range is of the order of magnitude of 60 m (pulse length 0.2 $\mu$s), while resolution in angle is of the order of magnitude of 600 m (lobe width 1° and range 20 km). The distance resolution of 60 m is in parity with the vessel length, while the angular resolution of 600 m is considerably greater than the width of the vessel of approx. 10 m. Angular resolution can be improved by increasing the antenna width and thereby reducing the lobe width. For an X band radar, approx. 1° lobe width will be obtained from an antenna which is 2.5 m wide. However, much larger antennae become unmanageable and expensive when employed in mobile units. Alternative methods of increasing resolution then become interesting.

One method of improving angular resolution of targets is to compare their speed with the aid of doppler analysis. An X band radar with prf = 4 kHz, a lobe width of 1° and an antenna rotation of 20 rpm can give a doppler filter band width of 60 Hz, which corresponds to a speed difference of 1 m/s or roughly 2 knots. This can be sufficient to separate vessels moving in convoy with low speed differences. Coherent integration which is employed in doppler analysis can, however, also be of assistance in improving angular resolution at low speed differences.

Another method of improving angular resolution is to consider the distance resolution. By increasing distance resolutions, the possibility will be improved of resolving two vessels of equal size also in the angular direction. With a distance resolution of, for instance, 15 m, the probability increases that two vessels will not exactly cover the same range segments. Moreover, radar target fluctuations imply that, for the same range segment, the echo reflections behave very different in amplitude and phase from the two vessels. This is an effect which may be a problem for a radar which tends to even out fluctuations, but also a possibility of improving resolution in a radar, as will be apparent in the following discussion.

It is also previously known in this art to employ so-called monopulse technique in angular measurement. In order to achieve a high degree of accuracy in angular measurement, several measurement values of the target are required in a plurality of different directions for the antenna lobe. These measurement values reflect in part the shape of the antenna lobe and it is therefore possible to calculate the position of the target in the angular direction. If the target fluctuates from measurement value to measurement value, this does not, however, disturb the angular measurement. Monopulse measurement implies that, in two obliquely inclined antenna lobes, it is possible to obtain two measurement values simultaneously from the target and, on comparison between the measurement values, to obtain a measure of the angular position of the target, i.e. one radar pulse gives two measurement values, which is sufficient for angular determination. Since the two measurement values are obtained simultaneously, the fluctuations of the target will have no effect on the relationship between these two values. The monopulse technique can thereby also be employed in a jump frequency radar apparatus. However, no correlation will then be obtained between different measurement pairs, and the monopulse measurement per se does not automatically entail any improvement of the resolution of several targets.

It will probably have been apparent to the skilled reader of the foregoing discussion that the prior art methods for resolution and measurement of radar targets in the angular direction suffer from drawbacks. An apparatus which realizes an improvement of angular resolution, in particular in coastal artillery radar, is described in our co-pending application number . The present invention relates to an alternative to the above-said apparatus. That which may substantially be considered as characterizing the present invention is apparent from the characterizing clause of appended Claim 1.

In this instance, the present invention is based on the concept of utilizing knowledge of the lobe form of the antenna.

## SUMMARY OF THE INVENTION

The present invention will be described in greater detail hereinbelow, with particular reference to the accompanying Drawing which schematically illustrates the inventive concept as herein disclosed.

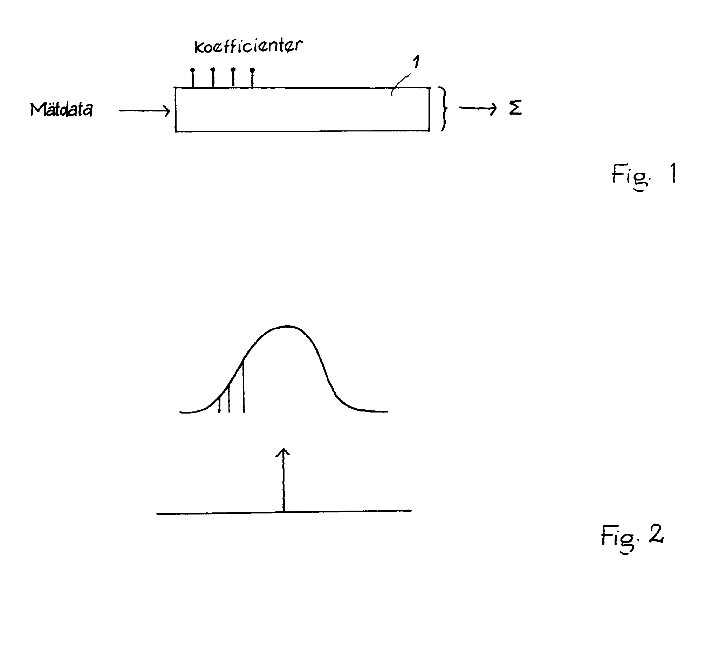

A characterizing feature of the present invention is that those measurement values which are obtained from the radar target are multiplied by coefficients obtained from the lobe form of the antenna in a measurement unit 1. The coefficients are, in this instance, selected such that, after totalling in the measurement unit, an impulse-like response is obtained from a punctiform target in the centre point of the lobe, see Fig. 1.

The measurement unit 1 may consist of a correlator, the measurement values being successively coupled into the unit and multiplied by each respective coefficient and added. As has already been mentioned, the end result will then, if the measurement values derive from a punctiform target, be a marked peak in that angular position which corresponds to the centre point of the antenna lobe when the lobe scans across the target, see Fig. 2.

The coefficients to the measurement unit 1 (the correlator) may be obtained by measuring the antenna lobe, for example by antenna scanning of a target.

The measurement values are included in an equation system in which the coefficients are solved for obtaining a solution which closely approximates a peak value for the centre position of the lobe, but is equal to zero for all other values. Using computerization, the solutions may be optimized to the minimum deviation from the desired solution, for example the so-called least square method can be employed.

In one advantageous embodiment of the present invention, the desired solution is applied as an impulse of wider extent than one angular step so as to reduce those side lobes which occur in the event of requirements of an excessively narrow impulse response in the desired solution.

The coefficients may further be obtained from equations formulated in the time plane, or alternatively as in filter technique solution from equations in the frequency plane.

Either exclusively the amplitude of the measurement values can be employed, or both amplitude and phase may be employed, in which event correction is effected for the phase doppler shift of a target between the measurement values. This correction may be effected either by correcting the measurement values themselves or by correcting the values obtained from the lobe shape.

The doppler correction is preferably carried out in parallel with phase angles of different sizes corresponding to different doppler segments. The doppler segments may be applied from the outset, or a dop-

pler filtering of the measurement values may, in a first step, also provide information on the doppler segment or segments that are of interest for selection for correcting the doppler phase in connection with the above-described angular determination.

## Claims

1. An apparatus for angular resolution and measurement of radar targets for a radar which transmits on a plurality of parallel or repeated frequencies while the radar antenna scans over current radar targets, **characterized in that** the measurement values obtained from the radar target are multiplied by coefficients obtained from the lobe shape of the antenna and selected such that, after totalling, an impulse-like response is obtained from a punctiform target in the centre point of the lobe.

2. The apparatus as claimed in Claim 1, **characterized in that** the coefficients are obtained by solution of equations with the condition that the measurement values which are obtained in time sequence and in dependence upon the shape of the antenna lobe are to form a value in the centre of the antenna lobe and be of the value of zero for other angular values, and if this function cannot be obtained exactly, solutions are adapted with, for example, the aid of the least square method in order to find those coefficients which give the smallest deviation from the desired solution.

3. The apparatus as claimed in Claim 2, **characterized in that** the desired solution is applied as an impulse of wider extent than one angular step so as to reduce those side lobes which occur on requirements of excessively narrow impulse responses in the desired solution.

4. The apparatus as claimed in Claim 1 or 2, **characterized in that** the coefficients are obtained from equations formulated in the time plane, or alternatively as in filter technique solution of equations in the frequency plane.

5. The apparatus as claimed in any one of Claims 1-4, **characterized in that** only the amplitudes of the measurement values are employed, i.e. the phase values are not employed.

6. The apparatus as claimed in any one of Claims 1-4, **characterized in that** both the phase and the amplitude of the measurement values are employed, and correction is effected for target doppler shift of a phase between the measurement values either by correcting the measurement values or correcting the values obtained from the shape of the lobe.

7. The apparatus as claimed in Claim 6, **characterized in that** doppler correction is effected in parallel, with phase angles of different sizes corresponding to different doppler segments, targets moving at different speeds having been filtered out to their respective doppler segment, and these doppler segments may be applied initially or doppler filtering of the measurement values may, in a first step, provide information on the doppler segment or segments which are of interest for selection for correcting doppler phase in connection with any of the angular resolution methods of Claims 1-6.

koefficienter

Mätdata $\longrightarrow$

$\longrightarrow \Sigma$

Fig. 1

Fig. 2